# DEMANDE DE BREVET EUROPEEN

(11) **EP 4 810 374 A1**
(43) Date de publication de la demande: **23.09.2026**
(21) Numéro de dépôt: 26165904.9
(22) Date de dépôt: 18.03.2026
(51) Int. Cl.: B64D 27/31, B64D 27/34, B64D 37/04, B64D 37/30, B64D 33/08, B64D 37/32, B64D 37/34

(54) **ENSEMBLE POUR AÉRONEF COMPRENANT UNE ARCHITECTURE SPÉCIFIQUE POUR LA DISTRIBUTION DE COMPOSITION DE FUEL ET D'ÉLECTRICITÉ**

(30) Priorité: 18.03.2025 FR 2502760
(71) Demandeur: Airbus (S.A.S.), 31700 Blagnac (FR)
(72) Inventeur: YADAV, Jitendra, 31700 Blagnac (FR); YBANEZ, Ludovic, 31700 Blagnac (FR); BOUKAYOUA, Souhaib, 31700 Blagnac (FR); DELARCHE, Antoine, 31700 Blagnac (FR); DUNOYER, François, 31700 Blagnac (FR); CHAPER, Camille, 31700 Blagnac (FR)
(74) Mandataire: BCF Global

(57) **Abrégé**

L'invention concerne un aéronef, comprenant Aéronef, comprenant un ensemble d'au moins une aile munie d'au moins une structure de propulsion, appelée nacelle, et d'un fuselage, l'ensemble comprenant une zone, dite zone chaude (Zc), comportant des éléments à des températures, dites températures chaudes, supérieures ou égales à une température, dite température de zone chaude (Tc), et une autre zone, dite froide (Zf), comportant des éléments à des températures, dites températures froides, inférieures ou égale à une température, dite température de zone froide, la zone chaude (Zc) et la zone froide (Zf) étant distinctes l'une de l'autre, et la température de zone froide (Tf) étant strictement inférieure à la température de zone chaude (Tc), dans la zone chaude (Zc) se trouvant un système de production d'électricité (7), et dans la zone froide se trouvant au moins un réservoir (9) de stockage de composition de fuel pour alimenter ledit système de production d'électricité, et une unité de propulsion électrique comportant un moteur et une unité de contrôle moteur (MCU) conformé pour être alimenté électriquement par le système de production d'électricité pour produire une poussée.

## Description

### Domaine technique

La présente invention se rapporte à un aéronef, par exemple à propulsion à hydrogène, comportant une architecture spécifique pour la distribution de composition de fuel et d'électricité.

### Technique antérieure

Dans un effort de réduction de l'impact carbone dû à l'aviation, la Titulaire a développé des projets d'aéronefs dont les moteurs fonctionnent avec une propulsion à hydrogène. Pour améliorer la compétitivité de ce type de propulsion, il s'avère primordial de mettre au point des équipements spécifiques.

C'est dans ce contexte que la présente invention vient améliorer la situation actuelle.

### Résumé

A cet effet, il est proposé un aéronef, comprenant un ensemble d'au moins une aile munie d'au moins une structure de propulsion, appelée nacelle, et d'un fuselage, l'ensemble comprenant une zone, dite zone chaude, comportant des éléments à des températures, dites températures chaudes, supérieures ou égales à une température, dite température de zone chaude, et une autre zone, dite froide, comportant des éléments à des températures, dites températures froides, inférieures ou égale à une température, dite température de zone froide, la zone chaude et la zone froide étant distinctes l'une de l'autre, et la température de zone froide étant strictement inférieure à la température de zone chaude, dans la zone chaude se trouvant un système de production d'électricité, et dans la zone froide se trouvant au moins un réservoir de stockage de composition de fuel pour alimenter ledit système de production d'électricité, et une unité de propulsion électrique comportant un moteur et une unité de contrôle moteur conformé pour être alimenté électriquement par le système de production d'électricité pour produire une poussée.

Ainsi, la séparation entre la zone chaude et la zone froide permet de réduire le poids, améliore la sécurité, la maintenance, les opérations, réduit les risques de défaillance, simplifie la fabrication de l'aéronef, diminue l'encombrement des systèmes de refroidissement du groupe motopropulseur et éléments de la chaîne propulsive à hydrogène et simplifie l'intégration des différents systèmes mécaniques, électriques et thermiques de l'aéronef. En particulier, grâce à l'invention, la source froide est plus proche des composants du groupe motopropulseur, ce qui assure un refroidissement efficace avec une complexité réduite et une conception modulaire. Il en résulte qu'il est possible d'augmenter le nombre de passagers que peut recevoir l'aéronef, sans avoir à modifier la conception actuelle des modèles d'aéronefs.

Selon un autre aspect, la température de la zone froide est cryogénique.

Selon un autre aspect, le système de production d'électricité comprend au moins une pile à combustible.

Selon un autre aspect, la zone chaude comprend au moins une partie arrière du fuselage.

Selon un autre aspect, dans la zone chaude se trouvent un système d'alimentation en air et/ou un système de régulation de température et/ou une entrée d'air de refroidissement et/ou une source d'énergie non-propulsive et/ou un ensemble de composants auxiliaires pour le système de production d'électricité.

Selon un autre aspect, la zone froide comprend ladite au moins une nacelle.

Selon un autre aspect, dans la zone froide se trouventl'unité de propulsion électrique (EPU) et/ou la boîte froide et/ou des lignes de distribution de composition de fuel.

Selon un autre aspect, le moteur (M) est supraconducteur et l'unité de contrôle (MCU) fonctionne à une température cryogénique.

Des câbles d'interconnexion électriques EWIS (21) entre la zone chaude et la sont froide sont supraconducteurs.

### Brève description des dessins

D'autres caractéristiques, détails et avantages apparaîtront à la lecture de la description détaillée ci-après, et à l'analyse des dessins annexés, sur lesquels :
Fig. 1

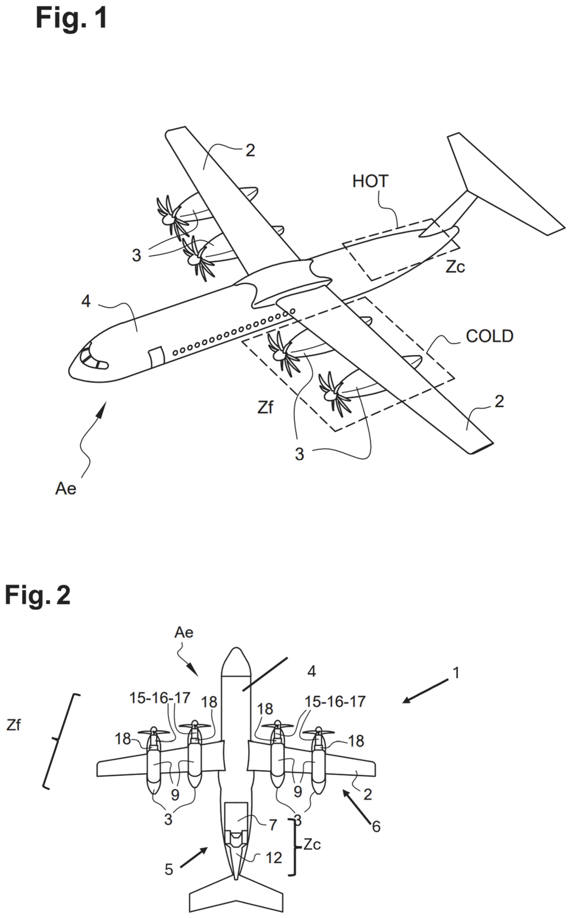

   [Fig. 1] est une vue schématique en perspective équipé d'une architecture selon un mode de réalisation de la présente invention.
Fig. 2
   [Fig. 2] est une vue de dessus de l'aéronef équipé de l'architecture de la figure 1, vue par transparence.
Fig. 3

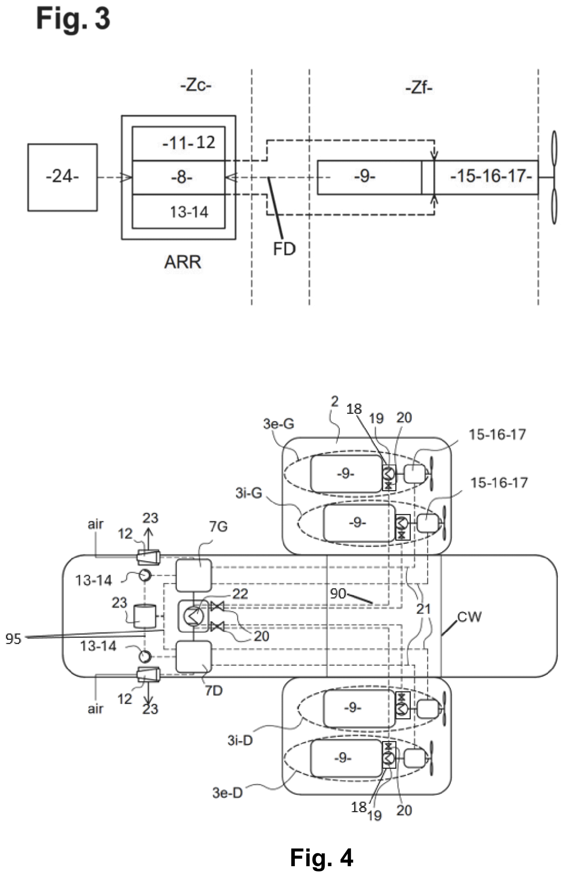

   [Fig. 3] est un schéma sous forme de blocs des systèmes de l'architecture de la figure 1.
Fig. 4
   [Fig. 4] est un schéma de haut niveau d'une architecture fonctionnelle simplifiée de la technologie supraconductrice et cryogénique de la figure 1.
Fig. 5

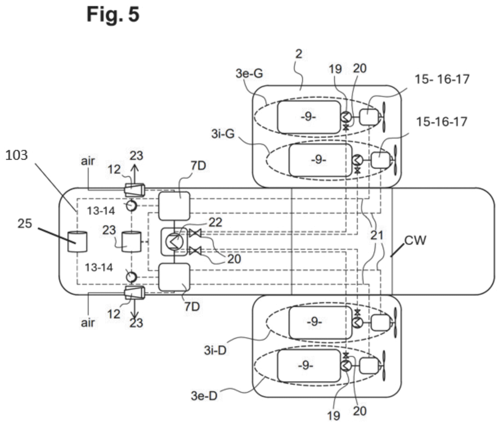

   [Fig. 5] est un schéma de haut niveau d'une architecture fonctionnelle simplifiée de la technologie de de la figure 1 selon une variante de réalisation, comportant un réservoir GH2 dans un cône arrière, par exemple pour des opérations au sol, notamment au démarrage de piles à combustible et du groupe motopropulseur, comme il sera détaillé.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en oeuvre relativement simplifiées de la présente invention. Comme l'homme du métier le comprend, d'autres mises en oeuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en oeuvre de la présente invention, ainsi que les exemples spécifiques de celle-ci, visent à englober à la fois les équivalents structurels et fonctionnels de celle-ci, qu'ils soient actuellement connus ou développés à l'avenir.

Dans la demande de brevets, pour simplifier la lecture, on parle d'hydrogène ou de dihydrogène, étant bien entendu que la molécule est le dihydrogène H2.

Comme visible sur les figures, l'invention a pour objet un aéronef Ae avec ou sans pilote présentant tout type de configuration

Dans la description qui suit, l'aéronef est à propulsion électrique. Par propulsion électrique, on entend de type AEA (pour « All Electric Aircraft » en anglais, complètement électrique), HEA (pour « Hybrid Electric Aircraft », hybride) ou MEA (pour « More Electric Aircraft »).

Dans la description qui suit, l'aéronef Ae est à propulsion à dihydrogène. Néanmoins, l'invention n'est pas limitée au dihydrogène, et d'autres compositions de fuel sont envisageables, comme le méthane par exemple.

Dans la description qui suit, l'ensemble comprend au moins une pile à combustible. Néanmoins, l'invention n'est pas limitée à ce type de système de production d'électricité et plus largement, l'invention couvre différents types de systèmes de production d'électricité (conventionnels et/ou non conventionnels) tels que des batteries, ou des types de moteurs alimentant des turbines électriques/turbines à gaz qui peuvent brûler n'importe quel carburant, y compris le dihydrogène liquide, par exemple.

L'aéronef Ae comprend un ensemble 1 d'au moins une aile 2 munie d'au moins une structure de propulsion 3 et d'un fuselage 4. La structure 3 est également appelée nacelle, au sens du mot « pod » en anglais. Ainsi, le terme nacelle doit être compris comme tout contenant qui porte un moteur, et, éventuellement, d'autres composants, comme par exemple un réservoir de carburant. Dans cette nouvelle architecture telle que décrite ci-après, la nacelle contient le système de propulsion électrique à dihydrogène (du fait qu'un réservoir LH2, une boite froide, un moteur supraconducteur et un MCU (MCU pour « motor control unit » en anglais) comme détaillés plus tard, sont dans le « pod »).

L'ensemble 1 comprend une première zone, dite zone chaude, référencée Zc. La zone Zc comprend la génération de puissance, c'est-à-dire le système de production de puissance, tel qu'une pile à combustible.

La zone chaude Zc comporte des éléments 5 présentant (c'est-à-dire fonctionnant à) durant toutes les phases de vol des températures, dites températures chaudes, supérieures ou égales à une température, dite température de zone chaude, Tc.

L'ensemble 1 comprend également une deuxième zone, dite zone froide Zf. La zone froide Zf, comporte des éléments 6 présentant des températures, dites températures froides, inférieures ou égales à une température, dite température de zone froide, Tf durant toutes les phases de vol voire même à l'arrêt. La température Tf est strictement inférieure à la température Tc.

La température Tf est cryogénique, c'est-à dire inférieure ou égale à -150°C.

La température Tf est par exemple inférieure ou égale à 120K, par exemple comprise entre 15K et 120K. La température Tc est par exemple supérieure ou égale à 220K, par exemple comprise entre 220K et 380K.

La zone chaude Zc et la zone froide Zf sont distinctes l'une de l'autre, comme il va être détaillé.

La zone chaude Zc comprend au moins une partie arrière du fuselage.

La zone froide Zf comprend ladite au moins une nacelle 3. Sur les figures, la zone froide Zf comprend quatre nacelles 3.

La partie centrale est la partie du fuselage 4 au niveau du caisson de voilure (référencé WB, pour « wing box en anglais). La partie arrière est à l'arrière de la partie centrale et s'étend depuis le caisson de voilure. Le cône arrière est la partie la plus à l'arrière de la partie arrière de section évolutive où se trouvent les empennages.

Dans la zone chaude Zc se trouve, parmi les éléments 5, au moins une pile à combustible FC, référencée 7 permettant une distribution électrique 8 (PGS pour « power generating system » en anglais). Le PGS comprend ladite au moins une pile à combustible et des composants BOP, explicités ultérieurement. Dans La zone froide Zf se trouve, parmi les éléments 6, au moins un réservoir 9 de stockage de dihydrogène, avantageusement sous forme liquide (LH2), pour alimenter la pile à combustible FC, 7.

Comme il ressort des figures, la zone chaude Zc comprend un système d'alimentation en air (ASS pour « air supply system » en anglais), un système de régulation de température 11 (TMS pour « thermal management system » en anglais), une entrée d'air de refroidissement 12 (RAC pour « ram air cooling » en anglais), une source d'énergie non-propulsive 13 (NPE pour « non propulsive energy ») et des composants auxiliaires 14 (BOP pour « balance of plant » en anglais) qui permettent aux piles à combustible de fonctionner. Il pourrait être possible selon certaines configurations d'avoir d'autres types de composants offrant les mêmes fonctionnalités : ainsi, seulement certains des composants listés ci-dessus pourraient être dans la zone chaude en combinaison avec d'autres composants.

Comme il ressort également des figures, la zone froide Zf, dans ladite au moins une nacelle 3, comprend une unité de propulsion électrique 16 (EPU pour « electric propulsion unit » en anglais) comportant un moteur 15 conformé pour être alimenté électriquement par la pile à combustible 7, une unité de contrôle moteur 17 (MCU pour « motor control unit » en anglais), un système pour maintenir le moteur 15, le réservoir 9 à température cryogénique, une boîte froide 18, comprenant par exemple un échangeur de chaleur LH2/GHe, et une boucle fermée cryogénique GHe (cryoventilateur, vannes ...). Il pourrait être possible selon certaines configurations d'avoir d'autres types de composants offrant les mêmes fonctionnalités aussi seulement certains des composants listés ci-dessus pourraient être dans la zone froide en combinaison avec d'autres composants.

Comme il ressort également des figures, entre la zone froide Zf et la zone chaude Zc, se trouvent des lignes 90 de distribution de composition de fuel telles que par exemple des lignes de distribution cryogéniques de dihydrogène gazeux GH2 pour alimenter les piles à combustible ainsi que des câbles d'interconnexion électrique 21 (lignes EWIS pour « electrical wiring interconnexion system ») qui peut être par exemple une distribution électrique supraconductrice continue (DC) pour alimenter électriquement l'EPU. Les lignes de distribution électrique et de composition de fuel traversent la nacelle, l'aile, le caisson de voilure et la partie arrière du fuselage.

On a illustré sur la figure 3 en pointillés, avec la référence FD la distribution de fuel entre le réservoir 9 et le PSG 8.

On détaille maintenant l'architecture électrique simplifiée en référence à la figure 4.

Sur la figure 4, l'aéronef Ae comprend quatre nacelles, deux nacelles par aile, appelées respectivement nacelle interne 3i-G et nacelle externe 3e-G de l'aile gauche, et nacelle interne 3i-D et nacelle externe 3e-D de l'aile droite. Une nacelle interne est plus proche du fuselage que la nacelle externe respective. De façon arbitraire et non contraignante, on appelle aile gauche une aile de l'aéronef disposée à gauche du fuselage pour un observateur faisant face au nez de l'aéronef.

On décrit les éléments dans un sens de circulation du fluide dihydrogène depuis son stockage jusqu'à la pile à combustible.

Comme visible sur cette figure, chacune des nacelles comprend un réservoir 9 de stockage du dihydrogène sous forme liquide, à une température cryogénique Tcy, ainsi qu'un EPU 16 à une température cryogénique Tcx supérieure ou égale à Tcy. Une ligne de distribution du dihydrogène liquide fait la connexion entre le réservoir 9 et un premier échangeur 19 ainsi que d'une vanne 20 d'ouverture et fermeture du réservoir disposé en aval du premier échangeur 19. Le premier échangeur 19 permet avantageusement de réchauffer le dihydrogène liquide par un autre fluide, tel que de l'hélium en phase gazeuse GHe ou un autre type de cryogène (comme LN2 ou un mélange de gaz cryogéniques), et de faire subir un changement de phase liquide-gaz au dihydrogène liquide issu du réservoir 9 à une température cryogénique de phase gazeuse. La chaleur dissipée hors du EPU qui présente une température cryogénique et des lignes de distributions électriques est utilisée dans l'échangeur 19 pour réchauffer le dihydrogène LH2 via une boucle de cryo-refroidissement GHe du groupe motopropulseur. L'hydrogène gazeux depuis la sortie de l'échangeur 19 alimente les piles à combustibles pour produire la puissance nécessaire qui est distribuée au travers des lignes électriques 21 EWIS, sous forme par exemple de câbles supraconducteurs. La puissance électrique produite par les piles à combustible est distribuée par les lignes EWIS aux quatre structures sur chaque aile et plus précisément aux EPU dans chaque structure de propulsion pour fournir la poussée requise.

Le premier échangeur 19 et la vanne 20 sont avantageusement disposés dans la nacelle et plus précisément dans une boite froide.

On note qu'avantageusement le moteur 15 est de type supraconducteur.

On appelle boîte froide 18 une boîte qui contient l'échangeur 19 LH2/GHe, la boucle GHe extrayant la chaleur et des cryo-composants utilisés pour la circulation du dihydrogène liquide et pour la circulation de GHe pour refroidir l'unité EPU à température cryogénique, notamment à cause des composants supraconducteurs.

Ainsi, dans chaque nacelle, une boîte froide 18 est associée à un réservoir de stockage du dihydrogène liquide 9.

Le fuselage 4 comprend un échangeur de chaleur 22 pour réchauffer le dihydrogène gazeux cryogénique provenant de la nacelle au travers des lignes 90 de distribution, par un autre fluide. L'autre fluide est un liquide de refroidissement, par exemple de l'éthylène glycol (EGW pour « ethyl glycol water » en anglais). Sur la figure 4, l' échangeur de chaleur 22 (par exemple EGW/GH2) est relié fluidiquement à l'arrière du fuselage aux quatre réservoirs de stockage de dihydrogène liquide, par des lignes de distribution 90 munies éventuellement de vannes 20 de régulation (deux illustrées sur la figure 4).

Les lignes de distribution de dihydrogène et les lignes EWIS venant de la zone froide traversent successivement l'aile, le caisson de voilure et la partie arrière du fuselage.

Comme également visible sur la figure 4, le fuselage 4 comprend une boucle thermodynamique relative au fluide de refroidissement, par exemple à l'éthylène glycol, comportant un réservoir 23 de stockage du liquide de refroidissement, par exemple de l'éthylène glycol et des lignes 95 de distribution de l'éthylène glycol pour refroidir les systèmes de génération de puissance et leurs composants auxiliaires. Le liquide de refroidissement une fois la chaleur des piles à combustibles extraite la dissipe dans un échangeur liquide de refroidissement/air du RAC 12.

Le fuselage 4 loge également au moins une pile à combustible FC, 7, comme déjà indiqué. Sur la figure 4, le fuselage comprend deux piles à combustible (ce chiffre n'étant pas limitatif), chacune des piles à combustible étant alimentée en dihydrogène par une sortie de l'échangeur 22. Les piles à combustible sont par exemple de type à membrane échangeuse de protons, à basse température ou haute température, et/ou de type à oxyde solide.

Comme on le voit sur la figure 4, les piles à combustibles 7 sont reliées fluidiquement au réservoir de liquide de refroidissement, par exemple EGW 23. Le liquide de refroidissement permet le refroidissement des piles à combustible 7 mais également des composants auxiliaires 14 (BOP), du système d'alimentation en air (ASS) et de la source d'énergie non propulsive 13 (NPE).

Les composants auxiliaires refroidis par le liquide de refroidissement dissipent de la chaleur pour réchauffer l'hydrogène et la chaleur manquante est produite par les piles à combustible. Le système de gestion de la chaleur basé sur le profil de mission extrait la chaleur de la pile à combustible pour réchauffer encore plus l'hydrogène pour atteindre la température de travail de la pile à combustible.

Le fuselage 4 comprend également au moins un système de refroidissement du liquide de refroidissement, par exemple de l'EGW, issu de la pile à combustible par de l'air ou RAC 12 (pour « ram air cooling » en anglais). Sur la figure 4, un système RAC est associé à chacune des piles à combustible. On note que le RAC peut être positionné où on le souhaite au niveau du fuselage et des ailes en fonction des principes de conception aérodynamique. Le fuselage comprend également une ligne de distribution pour ramener l'EGW refroidi par l'air dans le RAC au réservoir de stockage 23.

Le fuselage 4 comprend les câbles 21 d'interconnexion électrique EWIS distribuant du courant électrique généré par les piles à combustible jusqu'à l'EPU incluant le moteur et le MCU. Sur la figure 4, l'une des piles à combustible, dite pile gauche 7-G, alimente les EPU de l'aile gauche, et l'autre pile à combustible, dite pile droite 7-D, alimente les EPU de l'aile droite.

Sur la variante de la figure 5, l'aéronef comprend, en plus de l'architecture détaillée en relation avec la figure 4, dans son cône arrière, un réservoir de dihydrogène en phase gazeuse 25, ainsi que des lignes de distribution 103, pour alimenter les piles à combustible gauche et droite en dihydrogène gazeux à haute pression, 700 bar par exemple, afin de générer de l'électricité pour des opérations au sol. La température de la zone est avantageusement supérieure 273K. Les piles à combustible et le GH2 agissent en tant que APU « auxiliary power unit » pour au moins une minute.

En termes de température, le dihydrogène, en entrée du premier échangeur LH2/GHe 19 est à une température avantageusement comprise entre par exemple 15K et 20K et, en sortie du premier échangeur 19 entre par exemple 60K et 120K. La température de l'hélium en entrée du premier échangeur 19 est avantageusement comprise entre par exemple 60K et 120K, et entre par exemple 20K et 30K en sortie du premier échangeur 19. La température de l'hélium au niveau de l'EPU (moteur supraconducteur et MCU à température cryogénique), dans la boîte froide 18, est avantageusement comprise entre par exemple 20K et 120K.

A titre d'exemple non limitatif, la température du dihydrogène gazeux GH2 en entrée du deuxième échangeur est avantageusement comprise entre par exemple 60K et 120K, et, en sortie, entre par exemple 278K et 378K, tandis que la température du GWE est avantageusement comprise entre par exemple 278K et 378K en entrée du deuxième échangeur, et entre par exemple 233K et 328K en sortie du deuxième échangeur.

Comme il ressort déjà au moins partiellement de la description qui précède, on note que la présente architecture prévoit :
- un réservoir de stockage indépendant par nacelle, ce qui assure un découplage plus simple du LH2 et du fuselage, et l'éloigne des passagers dans les ailes,
- une distribution en sens opposé du dihydrogène et du courant électrique : la circulation de dihydrogène se fait vers l'arrière de l'aéronef, depuis les nacelles jusqu'à la partie arrière, tandis que le courant électrique se déplace vers l'avant de l'aéronef, depuis la partie arrière jusqu'aux nacelles,
- un agencement central des piles à combustibles dans le fuselage, grâce à la séparation des zones chaude et froide,
- facilité d'intégration, de maintenance et des opérations grâce au à la configuration modulaire de la séparation des zones chaude et froide.

L'architecture avec séparation des zones froide et chaude présente les avantages suivants :
- isolation de sécurité,
- augmentation du nombre de passagers,
- sans avoir à procéder à des modifications majeures dans l'agencement de l'aéronef,
- augmentation de la capacité de charge,
- meilleure distribution du dihydrogène et du courant électrique,
- compacité plus grande,
- amélioration et simplification de l'agencement de la nacelle, du fait de la compacité plus grande,
- une réduction du poids et de la trainée,
- maintenance et opérations techniques plus simples à réaliser grâce à la configuration en module chaud et module froid,
- réduction du bruit,
- distribution de LH2 et poussée équilibrées,
- réapprovisionnement en dihydrogène liquide simplifié.

Des modifications et des améliorations aux mises en œuvre décrites ci-dessus de la présente invention peuvent apparaître à l'homme du métier.

La description ci-dessus est illustrative au travers d'exemples plutôt que limitative. La portée de la présente invention est donc limitée uniquement par la portée des revendications ci-dessous.

## Revendications

1. Aéronef, comprenant un ensemble d'au moins une aile munie d'au moins une structure de propulsion, appelée nacelle, et d'un fuselage, l'ensemble comprenant une zone, dite zone chaude (Zc), comportant des éléments à des températures, dites températures chaudes, supérieures ou égales à une température, dite température de zone chaude (Tc), et une autre zone, dite froide (Zf), comportant des éléments à des températures, dites températures froides, inférieures ou égale à une température, dite température de zone froide, la zone chaude (Zc) et la zone froide (Zf) étant distinctes l'une de l'autre, et la température de zone froide (Tf) étant strictement inférieure à la température de zone chaude (Tc), dans la zone chaude (Zc) se trouvant un système de production d'électricité (7), et dans la zone froide se trouvant au moins un réservoir (9) de stockage de composition de fuel pour alimenter ledit système de production d'électricité, et une unité de propulsion électrique (EPU) comportant un moteur (M) et une unité de contrôle moteur (MCU) conformé pour être alimenté électriquement par le système de production d'électricité pour produire une poussée.

2. Aéronef selon la revendication précédente, dans lequel la température de la zone froide est cryogénique.

3. Aéronef selon l'une des revendications précédentes, dans lequel le système de production d'électricité comprend au moins une pile à combustible,

4. Aéronef selon l'une des revendications précédentes, dans lequel la zone chaude comprend au moins une partie arrière (ARR) du fuselage (4).

5. Aéronef selon l'une des revendications précédentes, dans lequel dans la zone chaude se trouvent un système d'alimentation en air (ASS) et/ou un système de régulation de température et/ou une entrée d'air de refroidissement (RAC) et/ou une source d'énergie non-propulsive (NPE) et/ou un ensemble de composants auxiliaires pour le système de production d'électricité (BOP).

6. Aéronef selon l'une des revendications précédentes, dans lequel la zone froide comprend ladite au moins une nacelle (3).

7. Aéronef selon l'une des revendications précédentes, dans lequel dans la zone froide se trouvent l'unité de propulsion électrique (EPU), et/ou la boîte froide et/ou des lignes (90) de distribution de composition de fuel.

8. Aéronef selon l'une des revendications précédentes, **caractérisé en ce que** le moteur (M) est supraconducteur et l'unité de contrôle (MCU) fonctionne à une température cryogénique.

9. Aéronef selon l'une des revendications précédentes, **caractérisé en ce que** des câbles d'interconnexion électriques EWIS (21) entre la zone chaude et la sont froide sont supraconducteurs.
